Europäisches Patentamt

European Patent Office

Office européen des brevets

(11) Publication number: **0 565 099 A1**

## (12) EUROPEAN PATENT APPLICATION

(21) Application number: **93105808.5**

(22) Date of filing: **08.04.93**

(51) Int. Cl.5: **B60C 23/04**

(30) Priority: **10.04.92 IT TO920332**

(43) Date of publication of application:
**13.10.93 Bulletin 93/41**

(84) Designated Contracting States:
**AT BE CH DE DK ES FR GB GR IE IT LI LU MC NL PT SE**

(71) Applicant: **T.S.S. S.r.L.**
**Via Acqui 43**
**I-10090 Cascine Vica, Torino(IT)**

(72) Inventor: **Zannier, Gian Carlo**
**Via Valgrana 3**
**I-10090 Reano (Torino)(IT)**

(74) Representative: **Bosotti, Luciano et al**
**c/o Jacobacci-Casetta & Perani S.p.A.**
**Via Alfieri, 17**
**I-10121 Torino (IT)**

(54) **A system for detecting parameters onboard vehicles.**

(57) A communication system between a plurality of sensors (12a, 12b) and a central unit (1), in particular for testing the pressure and/or temperature of the tyres. In the case of installation on industrial vehicles composed of a tractor (A) and trailer (B), the configuration data relating to the trailer (B) can be memorised in an electrical key (2) adapted to be selectively connected to the central unit (1) of the system installed on the tractor (A).

FIG. 3

EP 0 565 099 A1

The present invention relates in general to systems for communicating between a plurality of sensors and a central unit, and in particular to systems of this type which can be fitted, for example, on board articulated vehicles.

Systems of the above specified type are known in the art, for example, from the GB patent application No. GB-A-2 188 459 or from Italian Patent IT-B-1 219 753. These systems can be used advantageously to transmit to a central unit disposed in the driving cab of the motor vehicle messages emitted by sensors associated with the motor vehicle's wheels and indicative of the fact that the pressure of one or more of the tyres is insufficient or excessive.

These systems are essentially constituted by a central unit and a plurality of sensors installed for example on the vehicle wheels. In operation of the system these sensors are in communication relationship, for example by means of radio waves, with the central unit. In this way a central unit can receive messages transmitted by the sensors, process them and present corresponding information to the vehicle driver.

For correct operation of the system it is necessary that the central unit be in possession of information relating to the configuration of the system, in particular as far as the sensors are concerned. Usually, in fact, the central unit identifies the sensors by codes which these latter associate with messages transmitted to the central unit itself. Naturally, this latter must be preliminary cognizant of the codes allocated to the various sensors. Moreover, in the event, for example, that one of the sensors is broken or that its battery is discharged, the central unit (which is cognizant of the existence of this sensor), upon not receiving any message from the sensor, informs the driver of the occurrence of an anomaly so that he can rectify it.

The installation of systems of the above-described type is particularly advantageous on board industrial vehicles such as motor trucks, etc. These vehicles are often composed of two separate vehicles, a tractor and a trailer (or semi-trailer, for example a pivoted semi-trailer). Typically, a given tractor does not necessarily have a single specified trailer or semi-trailer associated with it. It can happen rather that the same tractor may have several different trailers or semi-trailers coupled to it at different times, and In some cases the tractor will travel without a trailer.

This practice, which is becoming ever more prevalent, can create significant difficulties if it should be desired to instal one of the above-mentioned systems on board. In fact, each time that the tractor is coupled to a different trailer it is necessary, for correct utilisation of the system, to arrange that the central unit mounted on the tractor, can have available all the information relating to the new trailer, or may be informed of the fact that the tractor will be travelling without a trailer. As a matter of fact, in such prior art systems it is possible to subject the central unit to learning cycles for the purpose of making it acquire information concerning the configuration of the system. However, the problem of obtaining this result in a very short time remains open since this operation must be absolutely free of errors in order to permit correct operation of the system. It is evident that, in the case of frequent replacement of trailers, the operation of reconfiguring the central unit (and the system as a whole) becomes critical.

The object of the present invention is therefore that of permitting variations in the configuration stored in the central unit to be made in a rapid and safe manner, thereby permitting, for example, frequent replacement of the trailers whilst simultaneously maintaining the serviceability of the parameter detecting system installed on board the tractor.

According to the present invention this object is achieved by a system having the characteristics set out in the appended claims.

In summary, in one of the possible embodiments thereof, the invention provides for the memorisation of configuration data relating to a given vehicle (for example a trailer) in memory means of permanent or semi permanent type, for example a read only memory (ROM) or an erasable programmable read only memory (EEPROM) and by configuring these memory means as a separate additional unit which can be selectively associated with the central unit. This additional unit was therefore be formed as a small module, card or electronic key, which can be linked to the central unit, for example placed on the dashboard of the principal vehicle (for example the tractor), with a simple coupling operation. A socket can be provided on the central unit for this purpose, which can receive and temporarily, but stable, lock the electronic key and which allows an easy connection and disconnection of this key by an electronic connector which upon connection of the key connects the key's memory to the circuits of the central unit via the electronic key's own connector. The reconfiguration of the central unit is, in practice, achieved by the simple operation of the introducing the key. This procedure is very advantageous since each trailer can be provided with its own specific configuration key intended to constitute an element of the trailer equipment (being, for example, retained when not in use, in the envelope containing the trailer's traffic documents). When the trailer is linked to the tractor the key can thus be simply inserted into the central unit of the tractor thereby immediately effecting the reconfiguration of the system. Upon uncoupling of the trailer from the tractor it will be sufficient to remove the key from the central unit installed on the tractor to indicate to this central unit that, for the moment, the tractor is not connected to any trailer.

A further advantageous characteristic of the present inventions is as follows.

A key associated with the central unit will be able to be programmed by this latter if it is necessary to record the configuration information relating to a new trailer, or whenever it is necessary to vary the previously stored configuration information (for example to change a sensor). In this way the central unit can conveniently act as an interface for storing the configuration data in the trailer keys.

One embodiment of the present invention will be described hereinbelow, purely by way of example, with reference to the attached figures of the drawings, in which:

Figure 1 is a schematic representation of a parameter detection system operating according to the present invent ion as installed on two separate vehicles;

Figure 2 is a functional block schematic representation of the detection system operating according to the present invention; and

Figure 3 is a perspective schematic representation of the central unit and of the configuration key of the system.

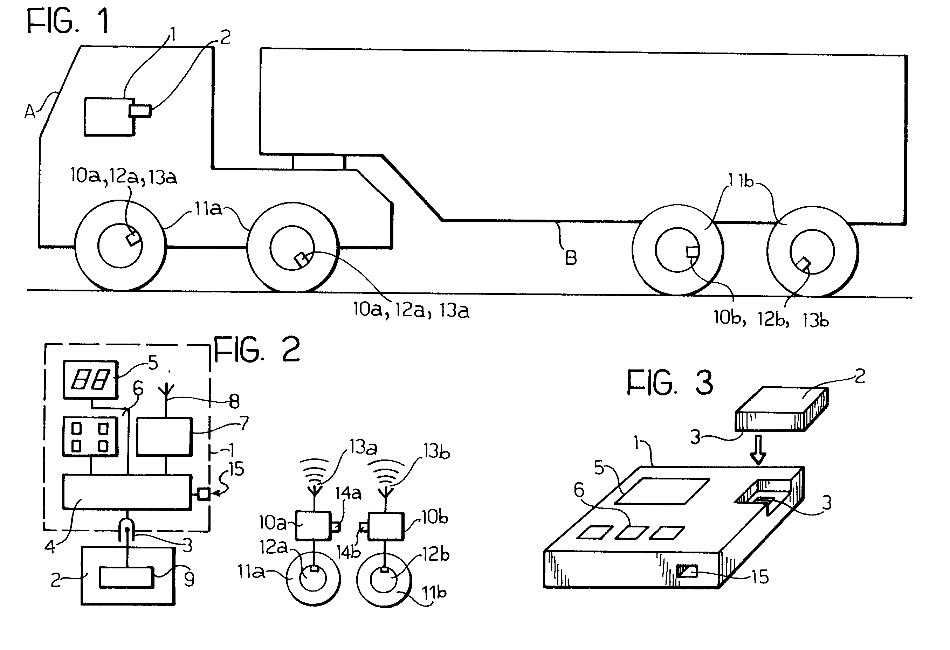

A system of the type according to the present invention comprises, with reference to figures 1 and 2, a central unit 1 mounted on board a first vehicle A, for example in the cabin of a tractor of an articulated truck (eg a pivoted semi-trailer). Unit 1 in turn includes a processor module 4, a display device 5, a data setting/control device 6 (for example a keyboard), a communication device 7 for communication by radio waves, and an antenna 8. The system further includes an assembly of sensors each constituted by a processor and transmission module 10a mounted on a respective wheel 11a of the vehicle A and carrying associated therewith one or more respective sensors 12a for detection of parameters such as, for example, the inflation pressure and/or temperature of the tyres on the respective wheels, and an associated memory (for example of the EEPROM type). Each module 10a is, therefore, able to process the signal from the sensor 12a and communicate via radio with the central unit 1 by means of a radio frequency device and an associated antenna 13a. In a substantially similar configuration, on another vehicle B, typically a semi-trailer intended to be coupled to the tractor A, there is provided a second assembly of sensors comprising processor and transmission modules 10b with associated respective sensors 12b mounted on the wheels 11b of the trailer B and also capable of communicating with the central unit by means of a respective radio frequency device and antenna 13b. In particular, the processor module 4 is provided with an electronic memory (usually this is also an EEPROM) which contains the data relating to the sensors 10a, 12a on the vehicle A, such as, for example, the sensor codes and the normal pressures of the wheels associated with the sensors.

All the above is widely known per se in the art: see in this connection, for example, the two patents already cited in the introduction to the present description.

If it is desired to link the vehicle A (tractor) with the vehicle B (trailer or semi-trailer - chosen in general from an assortment of different trailers intended to be connected to one or more tractors in dependence of the requirements of use) the problem arises of putting the central unit on into a condition such that it detects that the vehicle B has been linked to the vehicle A and that it is desired for the central unit 1 also to manage the parameter detection sensors 10b, 12b installed on the vehicle B. To this end the system according to the invention includes a key 2 in which there is a memory 9.

By complementary connectors 3 provided on the central unit 1 and on the key 2 (figure 3) the key 2 itself can be connected both mechanically and electrically to the central unit 1. In this way, by connecting the key 2 into the unit 1 the electronic memory 9 of the key 2 can be put into connection with the module 4 so as to make available thereto the data contained in the memory 9. In the currently preferred embodiment the memory is an EEPROM, for example of the 93C06 type, with a capacity of 256 bytes.

In particular, the memory 9 contains, in the form of an addressable and updatable table, the configuration data relating to the sensors 10b, 12b of the vehicle B such as the identification codes and/or the nominal pressures of the tyres to which the sensors are associated on the vehicle B. Simply by insertion of the key 2 the module 4 is able immediately to have available (by the connection to the memory 9) the system configuration data necessary for management of the sensors 12b. The operation for connecting of key 2 to the central unit 1 is extremely simple; making reference to Figure 3 it is in fact sufficient simply to insert the key 2 into a complementary socket 14 provided on the central unit 1. By this operation connection between the respective connectors 3 on the key 2 and the central unit 1 will be effected, thereby completing the operation. The three following tables reproduce, with reference to a currently preferred embodiment, the organisation of the memories relating to the sensors (table 1), the central unit (table 2) and the sensors of the second group (table 3).

3

### TABLE 1 - EEPROM MEMORY FOR SENSORS

| | |
|---|---|
| BYTE-$\emptyset$H | Code ) |
| BYTE-$\emptyset$L | Code )    Expressed in hexadecimal |
| BYTE-1H | Code ) |
| BYTE-1L | Number of sensors between 0 and 15 hexadecimal |
| BYTE-2H | Value of the pressure variation in tenths of a BAR so that updating of the central unit is indicated. |
| BYTE-2L | Value of the temperature variation in 0.5°C so that updating of the central unit is indicated |
| BYTE-3H | Number of steps of the ADC corresponding to the value of the pressure of 0 BAR (positioning of the curve of the electronic pressure sensor). |
| BYTE-3L | Number of steps of the ADC corresponding to the value of the pressure from 6.4 BAR (second positioning point). |
| BYTE-4H | Number of steps of the ADC corresponding to the temperature value of -27°C (positioning of the curve of the electronic temperature sensor). |
| BYTE-4L | Number of steps of the ADC corresponding to the temperature value 4°C (second positioning point). |
| BYTE-5H | Must contain a fixed number (for example 25') in hexadecimal. |
| BYTE-5L | Repetition time of the "sensor operative" message expressed in 102 units of wake up time (example with wake up of 2.5 seconds the number inserted will be the multiplier of about 4.5 minutes). |
| BYTE-6H | Sensor supply time before reading with ADC. Units of about 180 microsec. |
| BYTE-6L | Transmitter supply time expressed in units of about 200 microsec. |

4

| | |
|---|---|
| BYTE-7H | Unit of delay time in the repetition of the alarm transmission linked to the number of the sensor. Expressed in units of about 320 millisec. |
| BYTE-7L | Wait time for response from the central unit expressed in units of about 80 millisec. |
| BYTE-8H | Number of attempts to transmit alarm signal to the central unit if immediate response not obtained therefrom. |
| BYTE-8L | Number of attempts to transmit to the central unit the updating values read if immediate response not obtained therefrom. |
| BYTE-9H | Number of attempts to transmit the "sensor operative" message to the central unit if immediate response not obtained therefrom. |
| BYTE-9L | Delay time to repeat the transmission to be added to the variable delay as a function of the wheel number (BYTE-7H). Expressed in units of about 320 millisec. |
| BYTE-AH | Percentage departure from the nominal pressure to indicate the high pressure alarm. Expressed in steps of 3.125%. |
| BYTE-AL | Percentage departure from the nominal pressure value to indicate the low pressure alarm. Expressed in steps of 3.125%. |
| BYTE-BH | Range used in the micro processor. |
| BYTE-BL | High temperature alarm threshold. Value expressed in units of 0.5°C. |
| BYTE-CH | Value of the pressure at which the tyre must be considered as totally deflated (after achievement of this condition self learning of the value of the nominal working pressure can be obtained). Value expressed in tenths of a BAR. |
| BYTE-CL | Not used. |

| | |
|---|---|
| BYTE-DH | Value to be multiplied by the value contained in the next half byte to obtain the receiver supply time expressed in units of about 250 microsec. |
| BYTE-DL | See description of preceding half byte. |
| BYTE-EH | Pressure value check time to consider the tyre deflated expressed in units of about 2.5 sec. |
| BYTE-EL | Pressure value check time to consider the tyre inflated. Expressed in units of about 2.5 sec. |
| BYTE-FH | Flag used by the micro processor for self learning. |
| BYTE-FL | Value of the nominal working pressure to which reference is made for determination of the alarm threshold. If self learning is not utilised, necessary to set its value upon production. |

### TABLE 2 - EEPROM MEMORY FOR CENTRAL UNIT

| | |
|---|---|
| BYTE-∅H | Central unit code, recorded in production. |
| BYTE-∅L | Central unit code, recorded during production. |
| BYTE-1H | Central unit code, recorded during production. |
| BYTE-1L | Number of sensors intended to be in first group. Must be programmed upon installation, but to be able to test the central unit it is necessary during production to set in a value different from 0. |
| BYTE-2H | Central unit transmitter supply time. Value expressed in units of about 250 microsecs. |
| BYTE-2L | Number of strings of codes which it is desired to transmit from the central unit. |
| BYTE-3H | Sensor silence time after which the central unit will consider the sensor broken. Expressed in units of about 4.5 minutes. |
| BYTE-3L | Insert a fixed value (eg 45) |

### TABLE 3 - EEPROM FOR 2ND GROUP

| | |
|---|---|
| BYTE-∅H | Code of second group sensors to be memorised |

```
                       during production.
        BYTE-∅L        Code of second group  of sensors, to be  memo-
                       rised during production.
        BYTE-1H        Code of second group  of sensors, to be  memo-
                       rised during production.
        BYTE-1L        Number of  sensors intended  to be  in  second
                       group. This number is programmed upon  instal-
                       lation.
```

The information on the configuration of the sensors 10b,12b of the trailer B will have been loaded on the memory 9 upon installation of sensors 10b, 12b, by means of a suitable teaching unit. The key 2 therefore constitutes an item of equipment intended to accompany the trailer B to be inserted in the central unit 1 of the various tractors A to which The trailer B will be subsequently coupled.

This information can also be modified by rewriting or replacing the memory 9 whenever the sensors 10b, 12b on the trailer B are reconfigured or modified (replacement of damaged sensors, addition of new sensors, etc).

In particular, the arrangement according to the ingnetion lends itself to being utilised as a learning and/or modification unit for the memory 9 associated with a certain trailer B whatever the central unit 1.

It will be sufficient to engage the key 2 with this memory 9 in a central unit 1 to perform the learning cycle of the key 2 in question by writing (in known manner) the configuration data relating to the sensors 10b,12b of trailer into the memory 9. This result can be obtained, for example and in another way, by an operator who loads the said data by acting on the keyboard 6 of the central unit 1.

At this point the key 2 is ready for use and can be separated from the unit 1 used for programming it.

The system configuration described lends itself further to the following mode of operation. Each of the sensors is arranged so that it can be disactivated for a certain time interval (eg 20 seconds). This is achieved by command from the central unit 1 or by separating the associated sensor 12a 12b from a tyre which is inflated to a given pressure chosen as the reference pressure. The sensor then acts in an automatic manner to read and store (usually within itself) the value of this reference pressure as soon as it is reactivated (for example as soon as the associated sensor 12a,12b is connected back onto the tyre).

This result is usually obtained by the processor means (for example a microprocessor) present in the modules 10a, 10b. At this point each sensor is able to transmit this pressure value (and possibly a corresponding temperature value) to the central unit 1. This latter will be able to identify these values as coming from a given sensor in dependence on the system configuration data. This also relates to the trailer B the configuration data of which are stored in the key 2.

At the same time each sensor 10a,12a,10b,12b is able to utilise the stored reference pressure level in order to signal possible anomalous variations of the tyre pressure.

This mode of operation lends itself in particular to those situations of use in which the tyre inflation pressure of the vehicle must be adapted to difference operating and/or load conditions: for example when the vehicle changes from a fully loaded to an unloaded state or when it is intended to change from an asphalt road onto excavated land. In each case it is thus possible to arrange that the sensors automatically learn the pressure value to be considered as a reference value.

Finally, each detection device composed of a sensor 12a, 12b and associated communication means 10a,10b and 13a,13b, intended to be installed upon the wheels 11a , 11b of the tractor A or the trailer B can be provided with an electrical connector 14a,14b complementary to an associated electrical connector 15 provided on the central unit 1. By putting the central unit 1 (with its associated key 2 in the case of the sensors 10b, 12b of the trailer B) in programme mode it is sufficient temporarily to connect the said detection devices in succession by means of these complementary electrical connectors 14a 14b and 15 to the central unit 1 to personalise the detection device by memorising within it the code identifying the tractor A or the trailer B, and associated with this - the code identifying the wheel to which the detection device is linked. This function in particular allows the use of sensors 10a, 12a; 10b, 12b which are all substantially identical to one another with the possibility of "personalising" them in dependence on the specific installations.

The embodiment of the present invention described here has characteristics which are purely exemplary and non limitative of the scope of the present invention. To a man skilled in the art, in fact, it will be evident that the present invention can be produced in different forms and applied to different environments from that described. For example, the present invention could be utilised to detect other groups of different parameters from tyre pressure of the vehicle wheels (for example temperature, fluid levels, electrical parameters etc.). Specifically, one can consider monitoring vehicle tyre temperature based on a discrete relationship between pressure and temperature (eg as given by Boyle and Charles from standard physical laws).

As for communication, it could also take place not by means of radio waves but, for example, by means of electrical cables, optical fibres or magnetic coupling, etc. In particular, the reference, made several times in the present description, to the possible use on industrial units (tractor plus trailer) must not be interpreted as in any sense limitative in that the invention lends itself to being utilised, for example, on motor cars or other vehicles such as trucks, buses or special vehicles such as non-road vehicles and/or vehicles which use fluids such as water to pressurize the tyres. In this case, the sensors considered in the foregoing function with said fluids.

Again in respect of the sensors it is worthwhile recelling, as examples of sensors which can be used advantageously within the framework of the present invention, those disclosed in Italian Patent 1, 189, 631 or US Patents 4, 694, 273 and 4, 804, 808.

## Claims

1. A system for detecting parameters on board a vehicle (A), characterised in that said system comprises a set of sensors (10a, 12a) for detecting parameters on board the vehicle (A) and a central unit (1) in communication relationship with the said set of sensors (10a, 12a); the said central unit (1) including memory means storing data relating to the configuration of the system.

2. A system according to claim 1, characterised in that said vehicle is selected from the group consisting of an automobile, a truck, a bus and a special vehicle.

3. A system according to claim 1 or claim 2, characterised in that said sensors (10a, 12a) may be any type of pressure sensor together with a transmitter for transmitting pressure data to the central unit (1) which incorporates a receiver to receive and decode the transmission.

4. A system according to claim 1 or claim 3, characterised in that said sensors function with fluids such as water for special vehicles which use water to pressurize the tyres.

5. A system according to any of claims 1 to 4, characterised in that said central unit (1) can also be used to monitor vehicle tyre temperature based on a discrete relationship between pressure and temperature.

6. A system for detecting parameters on board a vehicle (A) characterised in that said system comprises a first set of sensors (10a, 12a) for detecting parameters on board a vehicle (A) and a central unit (1) in communication relationship with the said first set of sensors (10a, 12a); the said central unit (1) including memory means (4) storing data relating to the configuration of the system, wherein in order to allow selective association of the said vehicle (A) and possibly one other vehicle (B) on which there is mounted a second set of sensors (10b, 12b) for the detection of respective parameters on board the said other vehicle (B), there are provided further memory means (9) for storing data relating to the configuration of the system of the said second set of sensors (10b, 12b); the said further memory means (9) being configured as an additional unit (2) which can be coupled selectively to the said central unit (1).

7. A system according to claim 6, characterised in that the said further memory means (9) are configured as a key (2) selectively insertable into the said central unit (1).

8. A system according to claim 6, characterised in that the said further memory means (9) have a write facility such that, with the said additional unit (2) coupled to the said central unit (1) the central unit (1) is able to load into the said further memory means (9) data relating to the configuration of the system in relation to the said second set of sensors (10b, 12b).

**9.** A system according to claim 6, characterised in that the said further memory means (9) comprise electrically programmable erasable memory means.

**10.** A system according to any preceding claim, characterised in that the said parameters detected by said sensors (10a, 12a; 10b, 12b) are principally the pressure and/or the temperature of the vehicle tyres.

**11.** A system according to any preceding claim, characterised in that the said central unit (1) is in communication relationship with the said sensors (10a, 12a; 10b, 12b) by means of radio frequency electromagnetic signals (13a, 13b).

**12.** A system according to claim 6 or claim 7, characterised in that the said additional unit (2) constitutes an element of the equipment of the said other vehicle (B) which can be coupled selectively to the central unit (1) of a said first vehicle (A) chosen from a plurality of first vehicles (A).

**13.** A system according to any preceding claim, characterised in that the said central unit (1) is provided with temporary connection means (15) for connection to the said sensors (10a, 12a; 10b, 12b) to allow selective memorisation in the said sensors (10a, 12a; 10b, 12b), temporarily connected (14a, 14b, 15) to the said central unit (1), of data identifying the said vehicle (A) and/or the said other vehicle (B) and the envisaged mounting position of the sensor (10a, 12a; 10b, 12b).

**14.** A system for detecting parameters on board a vehicle (A), characterised in that said system comprises at least a first set of sensors (10a, 12a) for detecting parameters on board the vehicle (A) and a central unit (1) in communication relationship with the said at least one first set of sensors (10a, 12a); the said central unit (1) comprising memory means (4) which can store data relating to the configuration of the system itself, wherein said sensors (10a, 12a; 10b, 12b) are configured in such a way as to be able selectively to detect, for storage, a value of the respective detection parameter; the said value being usable as a reference value to identify possible anomalous variations.

**15.** A system according to claim 14, characterised in that the said sensors (10a, 12a; 10b; 12b) include processor means (10a; 10b) sensitive to a temporary disactivation of the associated sensor (12a; 12b) whereby to prearrange the sensor for detection so as to store, as a reference value, the value assumed by the associated detection parameter upon reactivation of the sensor (12a, 12b).

FIG. 1

FIG. 2

FIG. 3

EP 0 565 099 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| P,X | WO-A-9 214 620 (TRUCK TECH CORPORATION)<br><br>* page 17, line 19 - line 25 *<br>* page 69, line 28 - page 71, line 18; figures 34,35 *<br>* claim 67; figure 30 * | 1-3,10, 11,14,15 | B60C23/04 |
| P,A | | 6,8,9 | |
| A | WO-A-8 807 941 (CONSOLIDATED TECHNOLOGY)<br>* abstract; figures 15,16 * | 6,7 | |
| X | WO-A-9 011 902 (TRAMS ENTERPRISES)<br>* page 5, paragraph 2; figure 4 *<br>* page 11, line 7 - line 32; figure 6 * | 1-3,10 | |
| X | US-A-5 001 457 (WANG)<br>* claim 1; figures * | 1-3,10 | |
| X | US-A-4 695 823 (VERNON)<br>* column 2, line 10 - line 22; figures * | 1-3,10 | |
| P,X | US-A-5 109 213 (WILLIAMS)<br>* column 3, line 57 - column 5, line 24; figures 1,8,9-11 * | 1-3 | TECHNICAL FIELDS SEARCHED (Int. Cl.5 )<br><br>B60C |
| A | US-A-4 067 235 (MARKLAND)<br>* abstract; figures * | | |

The present search report has been drawn up for all claims

| Place of search | Date of completion of the search | Examiner |
|---|---|---|
| THE HAGUE | 18 JUNE 1993 | HAGEMAN M. |